# EUROPEAN PATENT APPLICATION

(11) **EP 2 940 567 A2**
(43) Date of publication of application: **04.11.2015**
(21) Application number: 13806816.8
(22) Date of filing: 19.08.2013
(51) Int. Cl.: G06F 3/0488

(54) **TOUCH SCREEN TERMINAL AND METHOD FOR ACHIEVING CHECK FUNCTION THEREOF**

(30) Priority: 31.12.2012 CN 201210592091
(71) Applicant: ZTE Corporation, Shenzhen, Guangdong 518057 (CN)
(72) Inventor: ZHANG, Liang, Shenzhen Guangdong 518057 (CN); WANG, Wei, Shenzhen Guangdong 518057 (CN); LIU, Wei, Shenzhen Guangdong 518057 (CN)
(74) Representative: EP&C
(86) International application number: PCT/CN2013/081800
(87) International publication number: WO 2013/189372

(57) **Abstract**

Provided is a method for achieving a check function on a touch screen terminal, which includes that the touch screen terminal selects a check mode and a positive/negative check manner, and in the check mode, the touch screen terminal locks a check page, identifies a gesture operation, and marks a plurality of target objects according to the gesture operation. A touch screen terminal is provided which can implement a check function. Through the touch screen terminal and the method for achieving a check function, the timer spent on a check operation is greatly reduced, the efficiency of the check operation is improved, and the user experience is promoted.

## Description

### TECHNICAL FIELD

The present disclosure relates to the technical field of mobile terminals, in particular to a touch screen terminal and a method for achieving a check function thereof.

### BACKGROUND

With the improvement of performance of a touch screen, integration level of chips and the manufacturing process thereof, more and more mobile devices, represented by a smart phone and a tablet computer, appear in the daily life of people. However, constrained by own congenital size and function, the mobile device fails to have as many input means as a computer. Obviously, for the mobile device which has more and more functions, this constraint is an urgent problem needing to be solved.

On a traditional object selection interface, a user can only select target objects one by one via a finger or a keyboard, which is a very painful experience although the function of selecting or deselecting all can be completed in some cases with respect to the computer. For some mobile devices with a full keyboard, the input experience of the user can be improved greatly and the possibility of misoperation is reduced, but the check operation on the touch screen is actually not improved at all.

Therefore, a user needs to click the objects to be selected one by one when an existing check manner is adopted for a touch screen terminal. Such a method involves a low efficiency and a long operation time, and it is apt to missing selection of an object when there are too many objects to be selected.

### SUMMARY

In view of this, the main objective of embodiments of the present disclosure is to provide a touch screen terminal and a method for achieving a check function thereof, in order to greatly reduce the time for a check operation, improve the efficiency of the check operation, and improve the user experience.

To this end, the technical solution of the embodiments of the present disclosure is implemented as follows:

An embodiment of the present disclosure provides a method for achieving a check function on a touch screen terminal, including:
the touch screen terminal selects a check mode and a positive/negative check manner; and
in the check mode, the touch screen terminal locks a check page, identifies a gesture operation, and marks a plurality of target objects according to the gesture operation.

Preferably, the step that the touch screen terminal identifies a gesture operation and marks a plurality of target objects according to the gesture operation may include:
in the positive check manner, the touch screen terminal identifies the gesture operation, and when the gesture operation is a sliding gesture operation, the touch screen terminal marks a plurality of target objects according to a sliding trace of the sliding gesture operation; or,
in the negative check manner, the touch screen terminal marks other target objects except the plurality of target objects according to the sliding trace of the sliding gesture operation in the check page.

Preferably, the step that the touch screen terminal identifies a gesture operation and marks a plurality of target objects according to the gesture operation may include:
in the positive check manner, the touch screen terminal identifies the gesture operation, and when the gesture operation is a click or long press gesture operation, determines a start position and an end position of target objects to be selected according to the click or long press gesture operation, and marks a plurality of target objects according to the start position and the end position; or,
in the negative check manner, the touch screen terminal marks other target objects except the plurality of target objects according to the start position and the end position determined according to the click or long press gesture operation in the check page.

Preferably, the step that a plurality of target objects are marked according to a sliding trace of the sliding gesture operation may include:
in the positive check manner, a start position and an end position of the sliding gesture operation are acquired, a rectangular area which takes a connecting line between the start position and the end position as a diagonal is determined according to the start position and the end position, and target objects in the rectangular area are retrieved and marked; or,
in the negative check manner, the rectangular area which takes the connecting line between the start position and the end position as a diagonal is determined according to the start position and the end position, and target objects outside the rectangular area are retrieved and marked.

Preferably, the step that a plurality of target objects are marked according to a sliding trace of the sliding gesture operation may include:
in the positive check manner, a closed area formed by a moving trace of the sliding gesture operation is determined, and the target objects in the closed area are retrieved and marked; or,
in the negative check manner, the closed area formed by the moving trace of the sliding gesture operation is determined, and target objects outside the closed area are retrieved and marked.

Preferably, the step that a plurality of target objects are marked according to a sliding trace of the sliding gesture operation may include:
in the positive check manner, target objects touched by a moving trace of the sliding gesture operation are determined and marked; or,
in the negative check manner, the target objects touched by the moving trace of the sliding gesture operation are determined and other target objects except the touched target objects are marked.

Preferably, the step that a start position and an end position of the target objects to be selected are determined according to the click or long press gesture operation, and a plurality of target objects are marked according to the start position and the end position may include:
in the positive check manner, a start target object and an end target object of the target objects to be selected are marked according to the click or long press gesture operation, and target objects between the start target object and the end target object are marked; or,
in the negative check manner, the start target object and the end target object of the target objects to be selected are marked according to the click or long press gesture operation, and other target objects except the target objects between the start target object and the end target object are marked.

Preferably, the step that a start position and an end position of the target objects to be selected are determined according to the click or long press gesture operation, and a plurality of target objects are marked according to the start position and the end position may include:
in the positive check manner, a start line and an end line of the target objects to be selected are set according to the click or long press gesture operation, and target objects between the start line and the end line are marked; or,
in the negative check manner, the start line and the end line of the target objects to be selected are set according to the click or long press gesture operation, and other target objects except the target objects between the start line and the end line are marked.

An embodiment of the present disclosure further provides a touch screen terminal, including a mode selecting unit, a gesture identifying unit and a processing unit, wherein
the mode selecting unit is configured to select a check mode and a positive/negative check manner, and trigger the processing unit;
the gesture identifying unit is configured to identify a gesture operation; and
the processing unit is configured to lock a check page in the check mode selected by the mode selecting unit, and mark a plurality of target objects according to the gesture operation identified by the gesture identifying unit.

Preferably, the gesture identifying unit may be configured to identify the gesture operation, and notify the processing unit when the gesture operation is a sliding gesture operation; and
the processing unit is configured to, in the positive check manner, when the gesture operation identified by the gesture identifying unit is the sliding gesture operation, mark a plurality of target objects according to a sliding trace of the sliding gesture operation; the processing unit may be further configured to, in the negative check manner, mark other target objects except the plurality of target objects according to the sliding trace of the sliding gesture operation identified by the gesture identifying unit in the check page.

Preferably, the gesture identifying unit may be configured to identify the gesture operation, and notify the processing unit when the gesture operation is click or long press gesture operation; and
the processing unit is configured to, in the positive check manner, when the gesture operation identified by the gesture identifying unit is the click or long press gesture operation, determine a start position and an end position of the target objects to be selected according to the click or long press gesture operation and mark a plurality of target objects according to the start position and the end position; the processing unit may be further configured to, in the negative check manner, mark other target objects except the plurality of target objects according to the start position and the end position determined according to the click or long press gesture operation identified by the gesture identifying unit in the check page.

Preferably, the processing unit may be configured to, in the positive check manner, acquire a start position and an end position of the sliding gesture operation, determine a rectangular area which takes a connecting line between the start position and the end position as a diagonal according to the start position and the end position, and retrieve and mark the target objects in the rectangular area; the processing unit may be further configured to, in the negative check manner, determine the rectangular area which takes the connecting line between the start position and the end position as a diagonal according to the start position and the end position, and retrieve and mark target objects outside the rectangular area.

Preferably, the processing unit may be configured to, in the positive check manner, determine a closed area formed by a moving trace of the sliding gesture operation and retrieve and mark target objects in the closed area; the processing unit may be further configured to, in the negative check manner, determine the closed area formed by the moving trace of the sliding gesture operation and retrieve and mark target objects outside the closed area.

Preferably, the processing unit may be configured to, in the positive check manner, determine and mark target objects touched by a moving trace of the sliding gesture operation; the processing unit may be further configured to, in the negative check manner, determine the target objects touched by the moving trace of the sliding gesture operation and mark other target objects except the touched target objects.

Preferably, the processing unit may be configured to, in the positive check manner, mark a start target object and an end target object of the target objects to be selected according to the click or long press gesture operation and mark the target objects between the start target object and the end target object; the processing unit may be further configured to, in the negative check manner, mark the start target object and the end target object of the target objects to be selected according to the click or long press gesture operation and mark other target objects except the target objects between the start target object and the end target object.

Preferably, the processing unit may be configured to, in the positive check manner, set a start line and an end line of the target objects to be selected according to the click or long press operation and mark the target objects between the start line and the end line; the processing unit may be further configured to, in the negative check manner, set the start line and the end line of the target objects to be selected according to the click or long press operation and mark other target objects except the target objects between the start line and the end line.

According to the touch screen terminal and the method for achieving a check function provided by the embodiments of the present disclosure, in a selected check manner, a selected area range is determined according to a sliding gesture operation and the target objects in the selected area range are marked; through the target objects touched by the moving trace of the sliding gesture operation, the touched target objects are marked directly; the start target object and the end target object of the target objects to be selected are marked through a click or long press gesture operation, and the target objects between the start target objects and the end target objects are marked; and the start line and the end line of the target objects to be selected are set by the click or long press gesture operation, and the target objects between the start line and the end line are marked. Thus, the target objects to be selected can be selected quickly and accurately, the time spent on the check operation is greatly reduced, the efficiency of the check operation is improved, and the user experience is improved.

### BRIEF DESCRIPTION OF THE DRAWINGS

Fig. 1 is a diagram showing the flow of a method for achieving a check function on a touch screen terminal according to a first embodiment of the present disclosure;
Fig. 2 is a diagram showing the composition structure of a touch screen terminal according to an embodiment of the present disclosure;
Fig. 3 is a displaying diagram showing the implementation of a check function on a touch screen terminal according to a second embodiment of the present disclosure;
Fig. 4 is a displaying diagram showing the implementation of a check function on a touch screen terminal according to a third embodiment of the present disclosure;
Figs. 5a-5c are displaying diagrams showing implementation of a check function on a touch screen terminal according to a fourth embodiment of the present disclosure;
Figs. 6a-6b are displaying diagrams showing implementation of a check function on a touch screen terminal according to a fifth embodiment of the present disclosure; and
Figs. 7a-7b are displaying diagrams showing implementation of a check function on a touch screen terminal according to a sixth embodiment of the present disclosure.

### DETAILED DESCRIPTION

The present disclosure is further described below in combination with the drawings and the embodiments in detail.

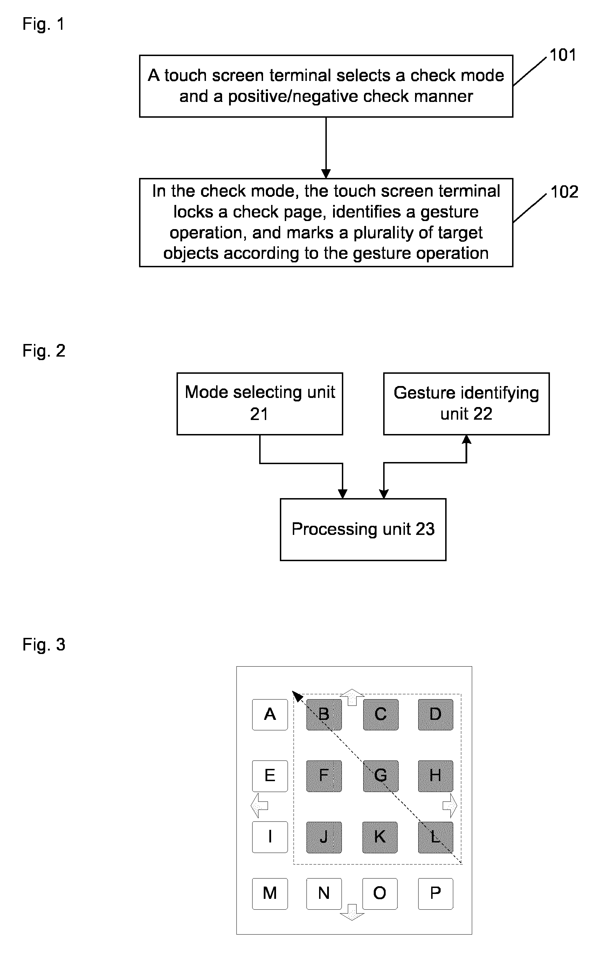

Fig. 1 is a diagram showing the flow of a method for achieving a check function on a touch screen terminal according to a first embodiment of the present disclosure; as shown in Fig. 1, the method includes the following steps.

Step 101 is that a touch screen terminal selects a check mode and a positive/negative check manner.

Here, the touch screen terminal may select the check mode according to the input of a user. For example, if the user selects to enable a check mode, the touch screen terminal activates the check mode after detecting the input operation of the user. The touch screen terminal may select different check modes according to different interface display layouts. For example, in a grid layout, a check function may be implemented by area selection and other check manners; and in a table layout, a check function may be implemented by determining a start target object and an end target object or setting a start line and an end line.

Here, the touch screen terminal may select a positive/negative check manner according to the requirement of a user, wherein the positive check manner is to mark the target objects selected by the touch screen terminal, and the negative check manner is to mark other target objects except the target objects selected by the touch screen terminal.

Step 102 is that in the check mode, the touch screen terminal locks a check page, identifies a gesture operation, and marks a plurality of target objects according to the gesture operation.

Preferably, the step that the touch screen terminal identifies a gesture operation and marks a plurality of target objects according to the gesture operation includes:
in a positive check manner, the touch screen terminal identifies the gesture operation, and when the gesture operation is a sliding gesture operation, the touch screen terminal marks a plurality of target objects according to the sliding trace of the sliding gesture operation; or,
in the negative check manner, the touch screen terminal marks other target objects, except the plurality of target objects marked above, according to the sliding trace of the sliding gesture operation in the check page.

Preferably, the step that a plurality of target objects are marked according to the sliding trace of the sliding gesture operation includes:
in the positive check manner, the start position and the end position of the sliding gesture operation are acquired, a rectangular area which takes the connecting line between the start position and the end position as a diagonal is determined according to the start position and the end position, and the target objects in the rectangular area are retrieved and marked; or,
in the negative check manner, the rectangular area which takes the connecting line between the start position and the end position as a diagonal is determined according to the start position and the end position, and the target objects outsides the rectangular area are retrieved and marked; or
in the positive check manner, a closed area formed by the moving trace of the sliding gesture operation is determined, and the target objects in the closed area are retrieved and marked; or,
in the negative check manner, the closed area formed by the moving trace of the sliding gesture operation is determined, and the target objects outside the closed area are retrieved and marked; or,
in the positive check manner, the target objects touched by the moving trace of the sliding gesture operation are determined and marked; or
in the negative check manner, the target objects touched by the moving trace of the sliding gesture operation are determined and other target objects except the touched target objects are marked.

Preferably, the step that the touch screen terminal identifies a gesture operation and marks a plurality of target objects according to the gesture operation includes:
in the positive check manner, the touch screen terminal identifies the gesture operation, and when the gesture operation is a click or long press gesture operation, determines the start positions and the ending positions of the target objects to be selected according to the click or long press gesture operation, and marks a plurality of target objects according to the start positions and the ending positions; or,
in the negative check manner, other target objects except the plurality of target objects marked above are marked according to the start positions and the ending positions determined according to the click or long press gesture operation in the check page.

The step that the start position and the end position of the target objects to be selected are determined according to the click or long press gesture operation, and a plurality of target objects are marked according to the start position and the end position includes:
in the positive check manner, the start target object and the end target object of the target objects to be selected are marked according to the click or long press gesture operation, and the target objects between the start target object and the end target object are marked; or,
in the negative check manner, the start target object and the end target object of the target objects to be selected are marked according to the click or long press gesture operation, and other target objects except the target objects between the start target object and the end target object are marked; or,
in the positive check manner, the start line and the end line of the target objects to be selected are set according to the click or long press gesture operation, and the target objects between the start line and the end line are marked; or,
in the negative check manner, the start line and the end line of the target objects to be selected are set according to the click or long press gesture operation, and other target objects except the target objects between the start line and the end line are marked.

To implement the method, Fig. 2 is a diagram showing the composition structure of a touch screen terminal according to a first embodiment of the present disclosure, as shown in Fig. 2, the touch screen terminal includes a mode selecting unit 21, a gesture identifying unit 22 and a processing unit 23, wherein
the mode selecting unit 21 is configured to select a check mode and a positive/negative check manner, and trigger the processing unit 23;
the gesture identifying unit 22 is configured to identify a gesture operation; and
the processing unit 23 is configured to lock a check page in the check mode selected by the mode selecting unit 21, and mark a plurality of target objects according to the gesture operation identified by the gesture identifying unit 22.

Preferably, the gesture identifying unit 22 is configured to identify the gesture operation, and notify the processing unit 23 when the gesture operation is a sliding gesture operation; and
the processing unit 23 is configured to, in the positive check manner, when the gesture operation identified by the gesture identifying unit 22 is a sliding gesture operation, mark a plurality of target objects according to the sliding trace of the sliding gesture operation; the processing unit 23 is further configured to, in the negative check manner, mark other target objects, except the plurality of target objects marked above, according to the sliding trace of the sliding gesture operation identified by the gesture identifying unit in the check page.

Preferably, the gesture identifying unit 22 is configured to identify the gesture operation, and notify the processing unit 23 when the gesture operation is click or long press; and
the processing unit 23 is configured to, in the positive check manner, when the gesture operation identified by the gesture identifying unit 22 is a click or long press gesture operation, determine the start position and the end position of the target objects to be selected according to the click or long press gesture operation and mark a plurality of target objects according to the start position and the end position; the processing unit 23 is further configured to, in the negative check manner, mark other target objects, except the plurality of target objects marked above, according to the start position and the end position determined according to the click or long press identified by the gesture identifying unit in the check page.

Preferably, the processing unit 23 is configured to, in the positive check manner, acquire the start position and the end position of the sliding gesture operation, determine a rectangular area which takes the connecting line between the start position and the end position as a diagonal according to the start position and the end position, and retrieve and mark the target objects in the rectangular area; the processing unit 23 is further configured to, in the negative check manner, determine the rectangular area which takes the connecting line between the start position and the end position as a diagonal according to the start position and the end position, and retrieve and mark the target objects outside the rectangular area.

Preferably, the processing unit 23 is configured to, in the positive check manner, determine a closed area formed by the moving trace of the sliding gesture operation and retrieve and mark the target objects in the closed area; the processing unit 23 is further configured to, in the negative check manner, determine a closed area formed by the moving trace of the sliding gesture operation and retrieve and mark the target objects outside the closed area.

Preferably, the processing unit 23 is configured to, in the positive check manner, determine and mark the target objects touched by the moving trace of the sliding gesture operation; the processing unit 23 is further configured to, in the negative check manner, determine the target objects touched by the moving trace of the sliding gesture operation and mark other target objects except the touched target objects.

Preferably, the processing unit 23 is configured to, in the positive check manner, mark the start target object and the end target object of the target objects to be selected according to the click or long press gesture operation and mark the target objects between the start target object and the end target object; the processing unit 23 is further configured to, in the negative check manner, mark the start target object and the end target object of the target objects to be selected according to the click or long press gesture operation and mark other target objects except the target objects between the start target object and the end target object.

Preferably, the processing unit 23 is configured to, in the positive check manner, set the start line and the end line of the target objects according to the click or long press operation and mark the target objects between the start line and the end line; the processing unit 23 is further configured to, in the negative check manner, set the start line and the end line of the target objects to be selected according to the click or long press operation and mark other target objects except the target objects between the start line and the end line.

The present disclosure is further described below in combination with the drawings and the embodiments in detail.

Fig. 3 is a displaying diagram showing the implementation of a check function on a touch screen terminal according to a second embodiment of the present disclosure. As shown in Fig. 3, in a grid layout, a first check mode and a positive check manner are selected; and when the check mode is activated, a check page is locked, namely, when it is detected that the current page cannot be turned during the sliding gesture operation, the current check page is locked. In the first check mode, when the gesture operation is a sliding gesture operation, the start position of the sliding gesture operation is detected and is taken as a first vertex to obtain the coordinate of the first vertex. It is provided that the coordinate of the first vertex is (X1, Y1), the sliding gesture operation on a touch screen is detected; and when the sliding gesture operation leaving the touch screen is detected, the end position leaving the touch screen is taken as a diagonal vertex of the first vertex to obtain the coordinate of the diagonal vertex. It is provided that the coordinate of the diagonal vertex is (X2, Y2), a rectangle taking the connecting line between the first vertex and the diagonal vertex as a diagonal is created; the four sides of the rectangle are parallel with the four sides of the touch screen; and the coordinates of other two vertexes of the rectangle are (X1, Y2) and (X2, Y1) respectively. In this way, a rectangular area with the four coordinate points as the vertexes is created. The target objects in the rectangular area are retrieved to obtain that target objects B, C, D, F, G, H, J, K and L in the display interface are within the rectangular area, and the target objects are marked to complete the check operation.

Preferably, a floating direction key in the clicked display interface is detected, and the floating direction key is for switching among a plurality of pages to complete the check operation needed by a user in different pages, and further for checking the target objects in different positions in all the pages once.

Preferably, if the centre point coordinate of the target objects is within the rectangular area, the target objects are considered to be within the rectangular area.

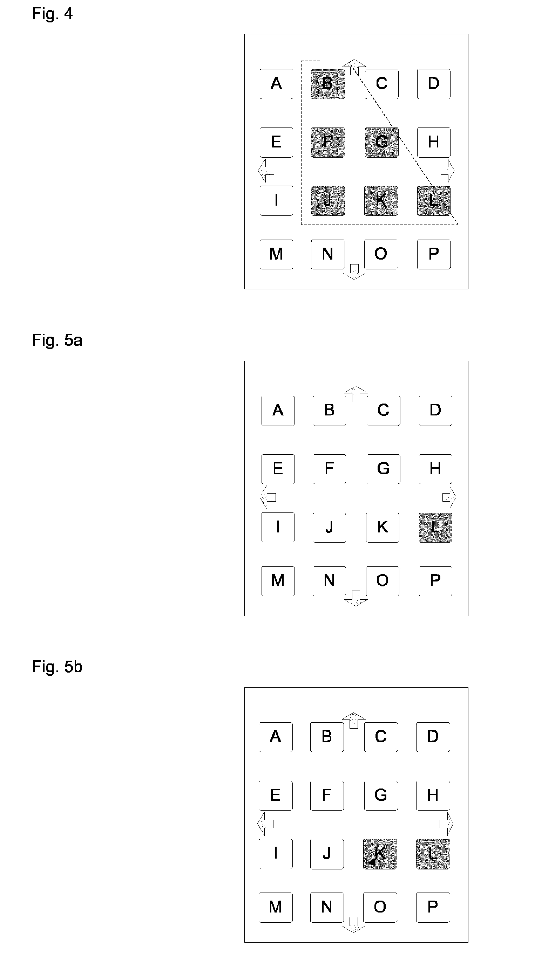

Fig. 4 is a displaying diagram showing the implementation of a check function on a touch screen terminal according to a third embodiment of the present disclosure. As shown in Fig. 4, in a grid layout, a second check mode and a positive check manner are selected, and a check page is locked when the check mode is activated, namely, when it is detected that the current page cannot be turned during the sliding gesture operation, the current check page is locked. In the second check mode, during a sliding gesture operation, a closed area is formed according to the moving trace of the sliding gesture operation, wherein the closed area may be polygonal, circular or in other irregular shape. With a polygonal closed area in Fig. 4 as an example, the start position of the sliding gesture operation is detected and is taken as a first vertex to obtain the coordinate of the first vertex; the tracing point of the moving trace can be recorded continuously by setting an interval time, for example, the current tracing point is recorded every 0.1 second, so as to obtain the coordinate range of the closed area, complete the section of the closed area and determine the coordinate range of the closed area. The target objects in the closed area are retrieved, as shown in Fig. 4, to obtain that the target objects B, F, G, J, K and L in the display interface are within the closed area, and the target objects are marked to complete the check operation.

Preferably, a floating direction key in the clicked display interface is detected, and the floating direction key may switch between a plurality of pages to complete the check operation needed by a user in different pages, and may further check the target objects in different positions in all the pages once.

Preferably, if the centre point coordinate of the target objects is within the closed area, the target objects are considered to be within the closed area.

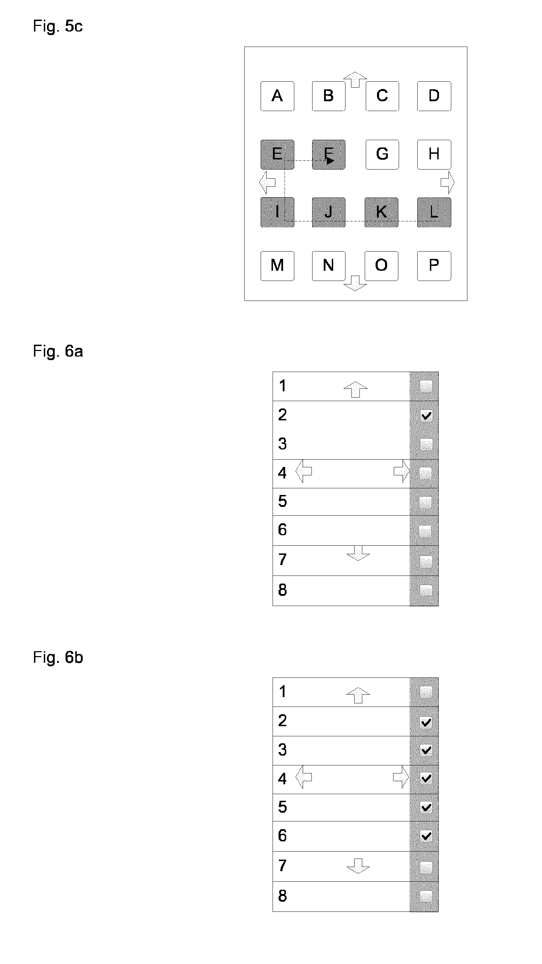

Figs. 5a to 5c are displaying diagrams showing the implementation of a check function on a touch screen terminal according to a fourth embodiment of the present disclosure. As shown in Figs. 5a-5c, in a grid layout, a third check mode and a positive check manner are selected, and a check page is locked when the check mode is activated, namely, when it is detected that the current page cannot be turned during a sliding gesture operation, the current check page is locked. In the third check mode, when the touch objects are touched by the moving trace of the sliding gesture operation during the sliding gesture operation, the target objects touched by the moving trace of the sliding gesture operation may be marked directly. For example, in Fig. 5c, when the moving trace of the sliding gesture operation directly touches target objects F, E, I, J, K and L, the touched target objects are marked directly.

Preferably, a floating direction key in the clicked display interface is detected, and the floating direction key may switch among a plurality of pages to complete the check operation needed by a user in different pages, and may further check the target objects in different positions in all the pages once.

Figs. 6a to 6b are displaying diagrams showing the implementation of a check function on a touch screen terminal according to a fifth embodiment of the present disclosure. As shown in Figs. 6a to 6b, in a list layout, a fourth check mode and a positive check mode are selected, and a check page is locked when the check mode is activated, namely, when it is detected that the current page cannot be turned during the sliding gesture operation, the current check page is locked. In the fourth check mode, when a click, a long press or other gesture operation are detected, a start target object and an end target object can be selected, and all the target objects between the start target object and the end target object are marked. For example, in Fig. 6a, the target object in the second line is selected as the start target object, in Fig. 6b, the target object in the sixth line is selected as the end target object, all the target objects between the second line and the sixth line, including the second line and the sixth line, are selected automatically by selecting the start target object and the end target object.

Preferably, a floating direction key in the clicked display interface is detected, and the floating direction key may switch among a plurality of pages to complete the check operation needed by a user in different pages, and may further check the target objects in different positions in all the pages once.

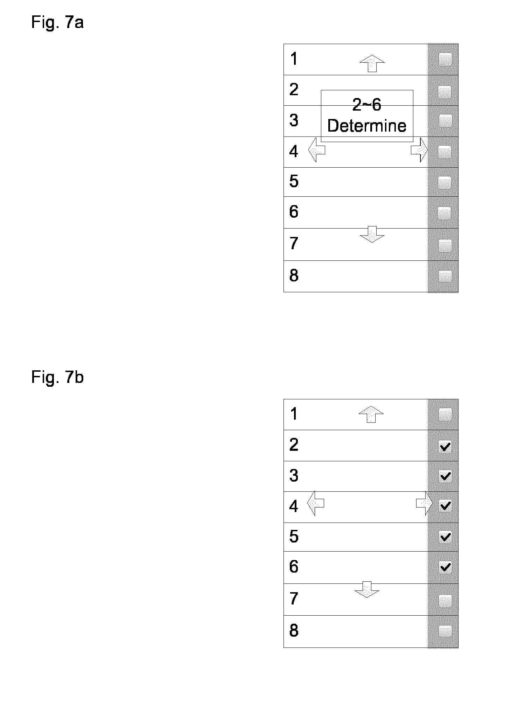

Figs. 7a to 7b are displaying diagram showing the implementation of a check function on a touch screen terminal according to a sixth embodiment of the present disclosure. As shown in Figs. 7a to 7b, in a list layout, a fifth check mode and a positive check mode may be selected, and a check page is locked when the check mode is activated, namely, when it is detected that the current page cannot be turned during a sliding gesture operation, the current check page is locked. In a fifth check mode, when a click, a long press or other gesture operation are detected, a dialog box for setting a start position and an end position may pop up, all the target objects between the start line and the end line are marked. For example, in Fig. 7a, a second line and a sixth line are set as a start position and an end position by user input respectively. In Fig. 7b, all the target objects between the second and the sixth lines are marked, including the second and the sixth lines.

Preferably, a floating direction key in the clicked display interface is detected, and the floating direction key may switch among a plurality of pages to complete the check operation needed by a user in different pages, and may further check the target objects in different positions in all the pages once.

The above are only the preferred embodiments of the present disclosure, and are not intended to limit the scope of protection of the claims of the present disclosure. Any modifications, equivalent replacements, improvements and the like within the spirit and principle of the present disclosure shall fall within the scope of protection of the present disclosure.

### INDUSTRIAL APPLICABILITY

In the embodiments of the present disclosure, in a selected check mode, a touch screen terminal locks a check page, identifies a gesture operation, and marks a plurality of target objects by the gesture operation, so that all the selected target objects can be selected quickly and accurately, the time spent on the check operation is reduced greatly, the efficiency of the check operation is improved, and the user experience is promoted.

## Claims

1. A method for achieving a check function on a touch screen terminal, comprising:
selecting, by the touch screen terminal, a check mode and a positive/negative check manner; and
locking, by the touch screen terminal, a check page, identifying a gesture operation, and marking a plurality of target objects according to the gesture operation in the check mode.

2. The method according to claim 1, wherein the step of identifying a gesture operation and marking a plurality of target objects according to the gesture operation by the touch screen terminal comprises:
in the positive check manner, identifying, by the touch screen terminal, the gesture operation, and when the gesture operation is a sliding gesture operation, marking a plurality of target objects according to a sliding trace of the sliding gesture operation; or,
in the negative check manner, marking, by the touch screen terminal, other target objects except the plurality of target objects according to the sliding trace of the sliding gesture operation in the check page.

3. The method according to claim 1, wherein the step of identifying a gesture operation and marking a plurality of target objects according to the gesture operation by the touch screen terminal comprises:
in the positive check manner, identifying, by the touch screen terminal, the gesture operation, and when the gesture operation is a click or long press gesture operation, determining a start position and an end position of target objects to be selected according to the click or long press gesture operation, and marking a plurality of target objects according to the start position and the end position; or,
in the negative check manner, marking, by the touch screen terminal, other target objects except the plurality of target objects according to the start position and the end position determined according to the click or long press gesture operation in the check page.

4. The method according to claim 2, wherein the step of marking a plurality of target objects according to a sliding trace of the sliding gesture operation comprises:
in the positive check manner, acquiring a start position and an end position of the sliding gesture operation, determining a rectangular area which takes a connecting line between the start position and the end position as a diagonal according to the start position and the end position, and retrieving and marking target objects in the rectangular area; or
in the negative check manner, determining the rectangular area which takes the connecting line between the start position and the end position as a diagonal according to the start position and the end position, and retrieving and marking target objects outside the rectangular area.

5. The method according to claim 2, wherein the step of marking a plurality of target objects according to a sliding trace of the sliding gesture operation comprises:
in the positive check manner, determining a closed area formed by a moving trace of the sliding gesture operation, and retrieving and marking target objects in the closed area; or
in the negative check manner, determining the closed area formed by the moving trace of the sliding gesture operation, and retrieving and marking target objects outside the closed area.

6. The method according to claim 2, wherein the step of marking a plurality of target objects according to a sliding trace of the sliding gesture operation comprises:
in the positive check manner, determining and marking target objects touched by a moving trace of the sliding gesture operation; or
in the negative check manner, determining the target objects touched by the moving trace of the sliding gesture operation and marking other target objects except the touched target objects.

7. The method according to claim 3, wherein the step of determining a start position and an end position of target objects to be selected according to the click or long press gesture operation, and marking a plurality of target objects according to the start position and the end position comprises:
in the positive check manner, marking a start target object and an end target object of the target objects to be selected according to the click or long press gesture operation, and marking target objects between the start target object and the end target object; or
in the negative check manner, marking the start target object and the end target object of the target objects to be selected according to the click or long press gesture operation, and marking other target objects except the target objects between the start target object and the end target object.

8. The method according to claim 3, wherein the step of determining a start position and an end position of the target objects to be selected according to the click or long press gesture operation, and marking a plurality of target objects according to the start position and the end position comprises:
in the positive check manner, setting a start line and an end line of the target objects to be selected according to the click or long press gesture operation, and marking target objects between the start line and the end line; or
in the negative check manner, setting the start line and the end line of the target objects to be selected according to the click or long press gesture operation, and marking other target objects except the target objects between the start line and the end line.

9. A touch screen terminal comprising a mode selecting unit, a gesture identifying unit and a processing unit, wherein
the mode selecting unit is configured to select a check mode and a positive/negative check manner, and trigger the processing unit;
the gesture identifying unit is configured to identify a gesture operation; and
the processing unit is configured to lock a check page in the check mode selected by the mode selecting unit, and mark a plurality of target objects according to the gesture operation identified by the gesture identifying unit.

10. The touch screen terminal according to claim 9, wherein
the gesture identifying unit is configured to identify the gesture operation, and notify the processing unit when the gesture operation is a sliding gesture operation;
the processing unit is configured to, in the positive check manner, when the gesture operation identified by the gesture identifying unit is the sliding gesture operation, mark a plurality of target objects according to a sliding trace of the sliding gesture operation; the processing unit is further configured to, in the negative check manner, mark other target objects except the plurality of target objects according to the sliding trace of the sliding gesture operation identified by the gesture identifying unit in the check page.

11. The touch screen terminal according to claim 9, wherein
the gesture identifying unit is configured to identify the gesture operation, and notify the processing unit when the gesture operation is a click or long press gesture operation; and
the processing unit is configured to, in the positive check manner, when the gesture operation identified by the gesture identifying unit is the click or long press gesture operation, determine a start position and an end position of target objects to be selected according to the click or long press gesture operation and mark a plurality of target objects according to the start position and the end position; the processing unit is further configured to, in the negative check manner, mark other target objects except the plurality of target objects according to the start position and the end position determined according to the click or long press gesture operation identified by the gesture identifying unit in the check page.

12. The touch screen terminal according to claim 10, wherein the processing unit is configured to, in the positive check manner, acquire a start position and an end position of the sliding gesture operation, determine a rectangular area which takes a connecting line between the start position and the end position as a diagonal according to the start position and the end position, and retrieve and mark the target objects in the rectangular area; the processing unit is further configured to, in the negative check manner, determine the rectangular area which takes the connecting line between the start position and the end position as a diagonal according to the start position and the end position, and retrieve and mark target objects outside the rectangular area.

13. The touch screen terminal according to claim 10, wherein the processing unit is configured to, in the positive check manner, determine a closed area formed by a moving trace of the sliding gesture operation and retrieve and mark target objects in the closed area; the processing unit is further configured to, in the negative check manner, determine the closed area formed by the moving trace of the sliding gesture operation and retrieve and mark target objects outside the closed area.

14. The touch screen terminal according to claim 10, wherein the processing unit is configured to, in the positive check manner, determine and mark target objects touched by a moving trace of the sliding gesture operation; the processing unit is further configured to, in the negative check manner, determine the target objects touched by the moving trace of the sliding gesture operation and mark other target objects except the touched target objects.

15. The touch screen terminal according to claim 11, wherein the processing unit is configured to, in the positive check manner, mark a start target object and an end target object of the target objects to be selected according to the click or long press gesture operation and mark target objects between the start target object and the end target object; the processing unit is further configured to, in the negative check manner, mark the start target object and the end target object of the target objects to be selected according to the click or long press gesture operation and mark other target objects except the target objects between the start target object and the end target object.

16. The touch screen terminal according to claim 11, wherein the processing unit is configured to, in the positive check manner, set a start line and an end line of the target objects to be selected according to the click or long press operation and mark target objects between the start line and the end line; the processing unit is further configured to, in the negative check manner, set the start line and the end line of the target objects to be selected according to the click or long press operation and mark other target objects except the target objects between the start line and the end line.
